# EUROPEAN PATENT APPLICATION

(11) **EP 2 420 987 A2**
(43) Date of publication of application: **22.02.2012**
(21) Application number: 11177681.1
(22) Date of filing: 16.08.2011
(51) Int. Cl.: G09B 29/10

(54) **Method and apparatus for searching contents**

(30) Priority: 19.08.2010 KR 20100080410
(71) Applicant: SAMSUNG ELECTRONICS CO., LTD., Suwon-si, Gyeonggi-do (KR)
(72) Inventor: Park, Jeong-hun, Gyeonggi-do (KR); Shin, Seung-woo, Gyeonggi-do (KR); Ahn, Young-joon, Gyeonggi-do (KR)
(74) Representative: Jenkins, Richard Gavin

(57) **Abstract**

A contents searching apparatus that includes a level setting unit configured to group contents according to specified regional standards and set an expansion level to at least one group based on contents distribution, and an interface unit configured to select one of the at least one group to which the expansion level is set. The contents searching apparatus also includes a control unit providing contents of the selected group according to the expansion level of the selected group by enlarging a map.

## Description

### CROSS-REFERENCE TO RELATED APPLICATION(S) AND CLAIM OF PRIORITY

The present application is related to and claims the benefit of Korean Patent Application No. 10-2010-0080410, filed on August 19, 2010, in the Korean Intellectual Property Office, the disclosure of which is incorporated herein in its entirety by reference.

### TECHNICAL FIELD OF THE INVENTION

The present invention relates to content searching techniques, and more particularly, to method and apparatus for searching contents.

### BACKGROUND OF THE INVENTION

Currently, if a user wants to display a map such as a Google map at a desired magnification, the user has to conduct a zoom in/out function of the map several times. For example, in the case of Naver map provided by the Korean internet service provider Naver, a total of twelve steps are conducted from the lowermost step to the uppermost step.

In order to alleviate or reduce such an inconvenience, the internet service providers of the map often provide a function of moving the map to various levels using a zoom bar control or a zoom in/out function using a mouse wheel control. However, a result of adjustment can be selected only after the map is loaded, and a desired level is, in many cases set after undergoing several iterative repetitions of the zoom in/out functions.

### SUMMARY OF THE INVENTION

To address the above-discussed deficiencies of the prior art, it is a primary object to provide one or more embodiments of the present disclosure provide a method and apparatus for searching for contents by classifying contents such as an image or a video according to certain relevant regions and displaying the contents with relevant regional information according to one or more levels.

According to an aspect of the present invention, there is provided a content searching method that includes grouping contents according to one or more specified regional standards, and displaying, on a map, at least one group to which an expansion level is set according to contents distribution. The content searching method further includes selecting one of the at least one group, and displaying contents of the selected group by enlarging the map according to an expansion level of the selected group.

In certain embodiments, the contents searching method may further comprise automatically modifying a regional range of contents displayed on the map based on a screen size of a display device.

Certain embodiments of the contents searching method may further comprise automatically modifying a regional range of contents displayed on the map based on the resolution of a screen of a display device.

Certain embodiments of the contents searching method may further comprise displaying information about an expansion level of the selected group when the at least one group is selected.

Certain embodiments may provide a method that includes grouping of contents may be selected according to specified regional standards, which may be displayed on a map according to at least one of group to which an expansion level is set according to contents distribution. The method also includes receiving contents from the outside, grouping the received contents according to specified regional standards, and displaying on the map the at least one group to which an expansion level is set according to contents distribution.

In certain embodiments, the operation of receiving contents may comprise receiving the contents from at least one device connected via a first network.

In certain embodiments, the operation of receiving contents may comprise receiving the contents via a web service.

Certain embodiments may provide a method that includes grouping contents according to specified regional standards, and displaying on a map at least one group to which an expansion level is set according to contents distribution. The method further includes classifying contents according to specified classification standards, grouping the classified contents according to specified regional standards, and displaying on the map the at least one group to which an expansion level is set according to contents distribution.

Certain embodiments may provide a method that includes displaying contents of the selected group by enlarging the map according to an expansion level of the selected group. The method further includes determining at least one display device connected via a second network, and displaying contents of the selected group on the determined at least one display device by enlarging the map according to an expansion level of the selected group.

According to certain embodiments, there is provided a contents searching apparatus that includes a level setting unit configured to group contents according to specified regional standards and setting an expansion level to at least one group based on contents distribution, and an interface unit selecting one of the at least one group to which the expansion level is set. The contents searching apparatus also includes a control unit configured to provide contents of the selected group according to the expansion level of the selected group by enlarging a map.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURES 1 through 3 illustrate an example contents searching system according to this disclosure;

FIGURE 4 illustrates an example tree structure between groups according to this disclosure

FIGURES 5A through 5D illustrate an example in which a group to which an expansion level is designated is displayed on a map, according to this disclosure;

FIGURE 6 is a flowchart illustrating a method of searching contents, according to an embodiment of the present invention;

FIGURE 7 illustrates an example method of searching contents, according to this disclosure; and

FIGURE 8 illustrates another example method of searching contents, according to this disclosure.

### DETAILED DESCRIPTION OF THE INVENTION

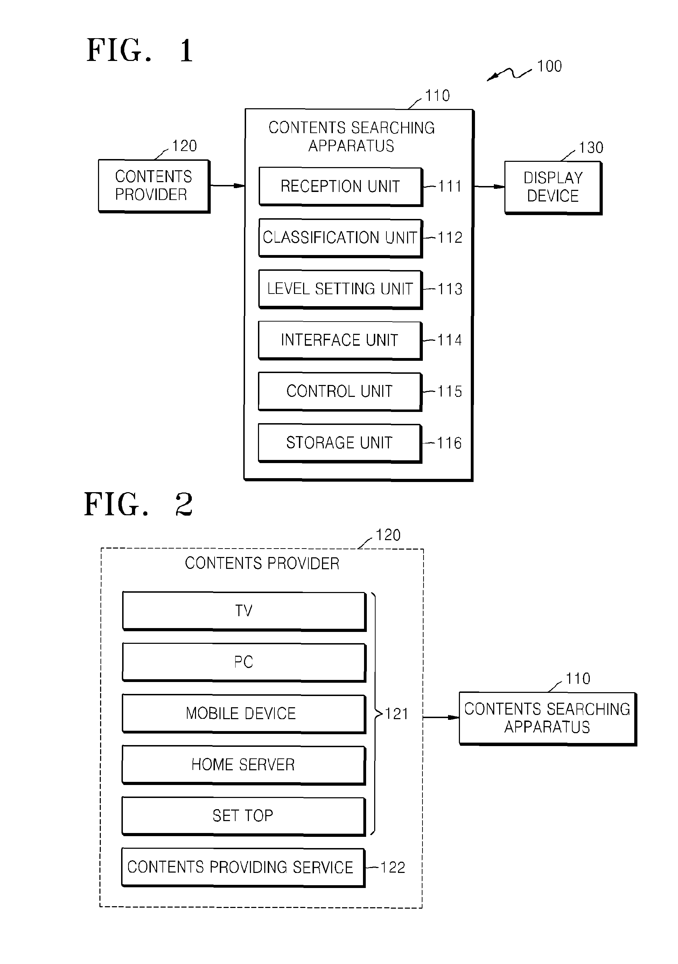

FIGURES 1 through 8, discussed below, and the various embodiments used to describe the principles of the present disclosure in this patent document are by way of illustration only and should not be construed in any way to limit the scope of the disclosure.
Those skilled in the art will understand that the principles of the present disclosure may be implemented in any suitably arranged computing system. The present invention will now be described more fully with reference to the accompanying drawings, in which example embodiments of the invention are shown.

According to an embodiment of the present disclosure, contents refer to those type of contents that include additional information such as position information. For example, contents may refer to an image or a video including global positioning system (GPS) information.

FIGURES 1 through 3 are block diagrams illustrating a contents searching system 100 according to this disclosure. The contents searching system 100 includes a contents searching apparatus 110, a contents provider 120, and a display device 130. The contents searching apparatus 110 transmits contents to the display device 130 that is communicatively coupled to the contents searching apparatus 110 via a predetermined wired or wireless network to display the contents thereon. Alternatively, the contents searching apparatus 110 may be included in the display device 130 or may include a display panel corresponding to the display device 130.

Referring to FIGURE 2, the contents searching apparatus 110 may receive contents from at least one of several devices 121 provided by the contents provider 120 via a network, such as a home network using a device, such as mobile devices (e.g., smart-phones), a home server, or a set-top box. Alternatively, the contents searching apparatus 110 may receive contents from a contents providing service 122 provided by the contents provider 120, which may be for example, an Internet web service, such as Picasa or Flickr. The contents provider 120 may provide a contents list. The contents provider 120 may be any type the provides contents to the contents searching apparatus 110.

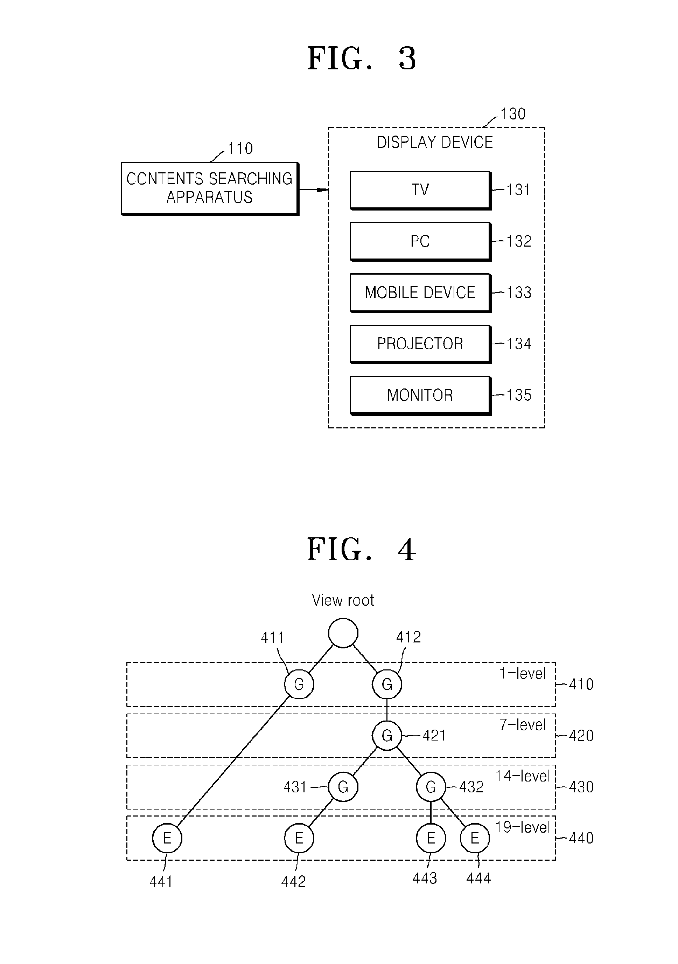

Referring to FIGURE 3, the contents searching apparatus 110 may designate at least one type of the display device 130 that is configured to display contents, such as a TV 131, a PC 132, a mobile device 133, a projector 134, or a monitor 135. The contents searching apparatus 110 may designate the at least one type of the display device 130 automatically or by manual selection. In certain embodiments, the contents searching apparatus 110 may be included in one of the display devices 130.

Referring to FIGURE 1 again, the contents searching apparatus 110 includes a reception unit 111, a classification unit 112, a level setting unit 113, an interface unit 114, a control unit 115, and a storage unit 116. In some embodiments, the contents searching apparatus 110 may further include its own display unit (not shown).

The contents searching apparatus 110 may receive contents or a contents list from the contents provider 120. The contents searching apparatus 110 is connected to the contents provider 120 via a wired or wireless communication network. The contents provider 120 may include any device that is communicatively coupled to the contents searching apparatus 110 via a network, or may be a contents providing service like a web service.

The reception unit 111 receives contents or a contents list from the contents provider 120. The received contents are stored in the storage unit 116.

The classification unit 112 classifies the received contents or the contents stored in the storage unit 116 according to specified classification standards. The classification unit 112 may classify the contents according to classification standards which may include additional information included in the contents. For example, additional information may include one or more persons, a time associated with the contents, a preference associated with the contents, a frequency of occurrence of the contents, a number of connection times associated with the contents, or the like. Thus, certain embodiments may display all contents, or only classified contents on a map that will be described in detail below.

The level setting unit 113 groups the contents stored in the storage unit 116 according to specified regional standards based on the position information included in the contents, and sets an expansion level to the content groups based on contents distribution.
The level setting unit 113 extracts additional information related to position information, such as GPS information included in an image, from the contents, and groups adjacent contents according to specified regional standards, such as the continent or countries associated with the contents, based on the extracted additional information. Then, the level setting unit 113 sets an expansion level to each of the content groups according to the distribution of contents included in the groups, that is, according to the number of pieces of additional information associated with the contents.
The expansion level generally refers to a degree of magnifying a map to be displayed. For example, an expansion level of '1' may be set to a 1:25000 zoom level and an expansion level of '2' may be set to a 1:5000 zoom level. According to the one embodiment, if a relatively excessive quantity of contents are included in a group, a degree of magnifying the zoom level of the map on which the group is displayed may be set to a low level, and if the number of contents included in a group is relatively small, a degree of magnifying the map on which the group is displayed may be set to a high level. A low level of magnification indicates that a zoom level at which a map is displayed is high, that is, a relatively large reduction from the actual size. For example, if all of the nation of South Korea is shown a single screen, a zoom level in this case may be regarded to be lower than all of the city of Seoul is shown. If there are many contents related to Korea, an expansion level of content groups classified in connection with Korea is set to a low level, and thus, all of Korea is displayed on the map shown on the screen. However if there are few contents related to a geographical region such as the U.S.A., an expansion level of content groups classified in connection with the U.S.A. is set to a high level, and thus, a level may be displayed, at which U.S. cities, which are smaller in size than Korea, are displayed on the map.

FIGURE 4 illustrates an example tree structure between groups according to this disclosure. Various groups are organized in different levels, namely, level-1 410, level-7 420, level-14 430, and level-19 440. Each group is coupled to certain other groups of different levels in a tree structure. In this particular embodiment, level-1 410 represents a level at which the map is reduced the most, and level-19 440 represents a level at which the map is expanded the most. In other embodiments, the levels of the tree may be configured in any suitable manner. In FIGURE 4, G refers to a group, and E refers to an event. An event refers not to group but to each content. At level-1 410, two groups 411 and 412 are displayed on the map. One group 411 is set to an expansion level corresponding to level-1 410 and is connected to an event 441 of the level-19 410. When the user selects the left group 411 in the level-1 410, the map is magnified at a magnification corresponding to the level-19 440, and the event 441 of the level-19 440 is displayed. Another group 412 is set to an expansion level corresponding to the level-1 410 and is connected to a group 421 of the level-7 420. When the user selects the right group 412 in the level-1 410, the map is expanded at a magnification corresponding to the level-7 420, and the group 421 is displayed on the expanded map. The group 421 at an expansion level corresponding to level-14 430 is connected to groups 431 and 432 of the level-14 430. When the user selects the group 421 of the level-7 420, the map is expanded at a magnification corresponding to the level-14 430, and the groups 431 and 432 of the level-14 430 are displayed on the map. In this case, the group 421 of the level-7 420 is connected to groups 431 and 432 of the level-14 430, and in this case, the groups 431 and 432 are connected according to regional adjacency and thus are displayed on one screen. The left-most group 431 of the level-14 430 is connected to an event 442 of the level-19 440, and the right-most group 432 of the level-14 430 is connected to events 443 and 444 of the level-19 440. When the user selects the groups 431 and 432, the map is expanded at a magnification corresponding to the level-19 440, and the connected events 442, 443, and 444 are displayed.

The interface unit 114 may select one of the groups displayed on the display unit based on a user selection.

The control unit 115 displays contents of a group that is selected by enlarging the map image according to the expansion level of a selected group on the display unit. In one embodiment, the control unit 151 may adjust a range of specific groups and a range of an area to be displayed on the map, according to the size or resolution of the display unit. Also, when the control unit 115 selects one of the groups, information about the expansion level of the selected group, for example, a bar-type indicator showing an expansion degree, is generated and displayed on the display unit.
In this particular case, the user may predict to what expansion level the map is to be expanded.

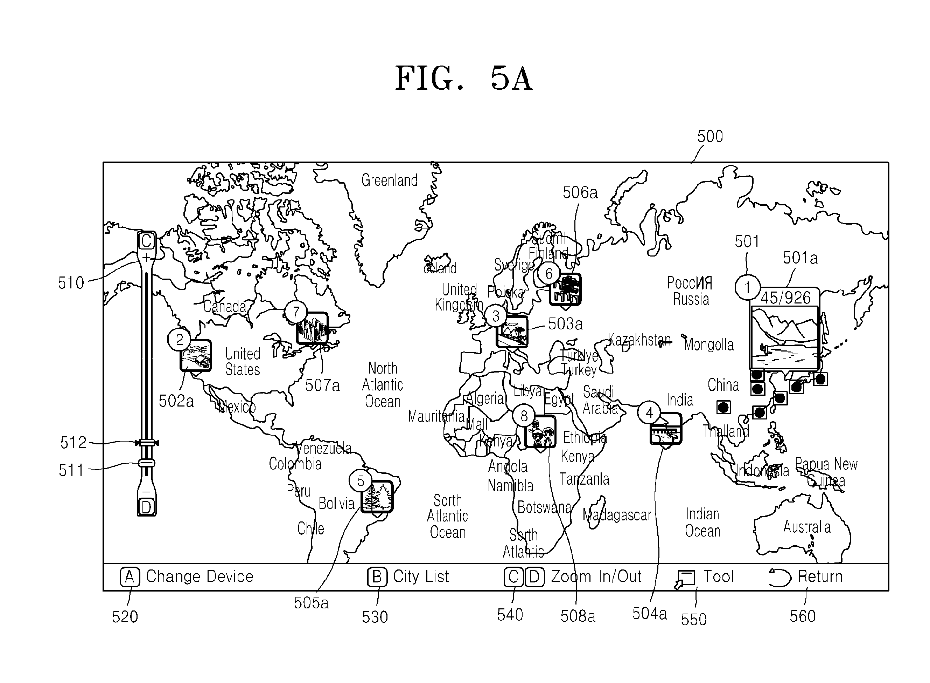

FIGURES 5A through 5D illustrate an example in which a group to which an expansion level is designated is displayed on a map 500, according to this disclosure. Groups having identical expansion levels displayed on a display unit are illustrated in FIGURES 5A through 5D.

Groups 501a through 509a having an uppermost level are displayed. A magnification of a map corresponds to that of a current level. In this particular embodiment, a world map is displayed at a magnification of a map corresponding to a level-1. As shown, the group 501a having the relatively largest quantity of contents are be highlighted or displayed with a relatively larger viewing area than the other groups 502a through 509a. Also, the quantity of contents existing in the group may be displayed on the group 501a.
In certain embodiments, if a touch input is available on the display device, the user may select a group by touching the display screen.
In other embodiments, the user may select a group via an identifier assigned to each group using a remote control. A number `1' displayed over the group 501a corresponds to a number '1' key of a keypad configured on the remote control. The map 500 of FIGURE 5A may include a 'Change Device' button 520 through which a display device can be changed, a 'Zoom In/Out' button 540 through which expansion or reduction of a map may be performed, a 'Tool' button 550 to which various functions related to a map are attached, and a 'Return' button 560 through which to a previous screen or a main screen can be returned. Also, a bar-type indicator 510 indicating a magnification 511 of a current map may be included in a specified area of the map. Also, the bar-type indicator 510 may display a magnification 512 of a map corresponding to an expansion level set to a group that is currently being highlighted by overlapping. For example, when the user selects a group 501a, the bar-type indicator 510 is moved to a level that is set to the selected group.

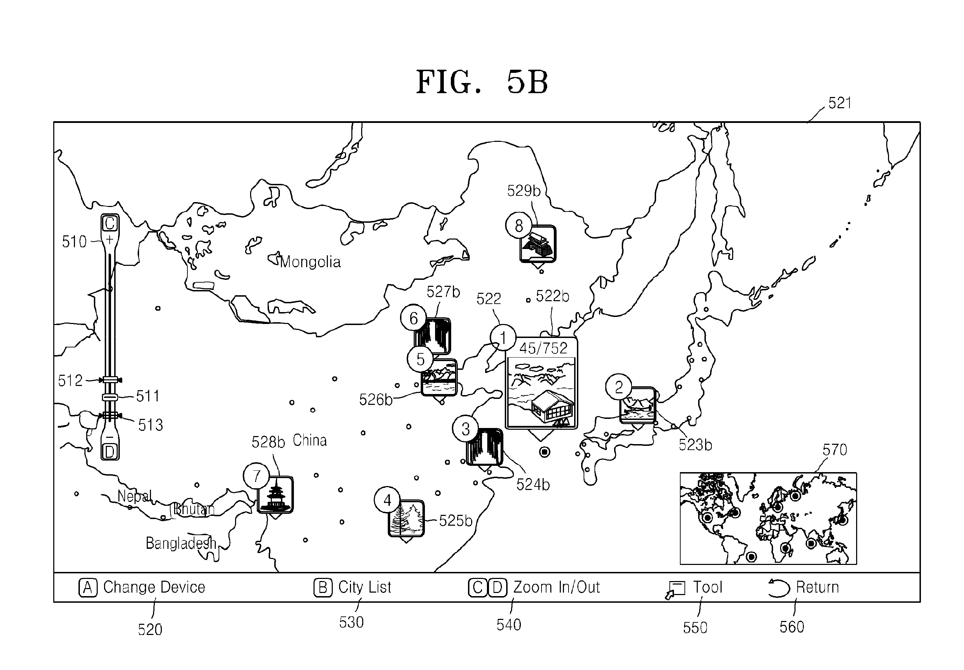

FIGURE 5B illustrates another example map 521 that may be displayed on the display according to this disclosure. Groups 522b through 529b have a lower expansion level than the expansion level of group 501a when selected in the map 500 illustrated in FIGURE 5A. A magnification of the map 521 corresponds to a current level.
The group 522b including the relatively largest amount of contents may be highlighted or displayed larger than the other groups 523b through 529b. Also, the number of contents in the group 522b may be displayed with the group 522b. The groups may be displayed in the same manner as described with reference to FIGURE 5A. The bar-type indicator 510 may display a magnification 513 of a map corresponding to an expansion level of a previous stage by overlapping. Also, a map 570 corresponding to the uppermost level may be displayed in a specified area of a current map, and particular marking may be done so that a corresponding region can be recognized. Alternatively, the map may be that of a previously selected expansion level.

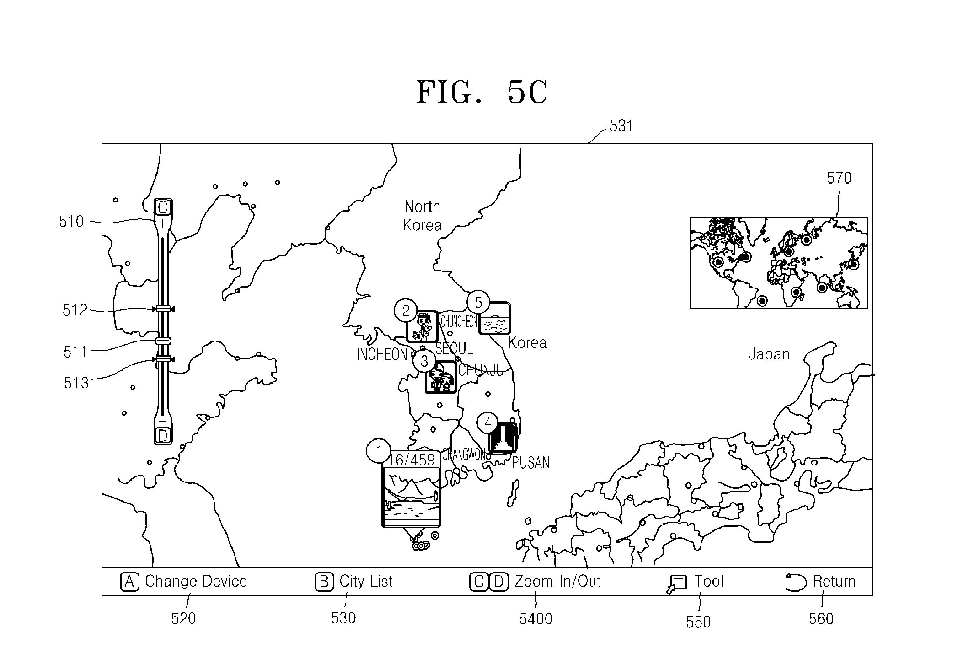

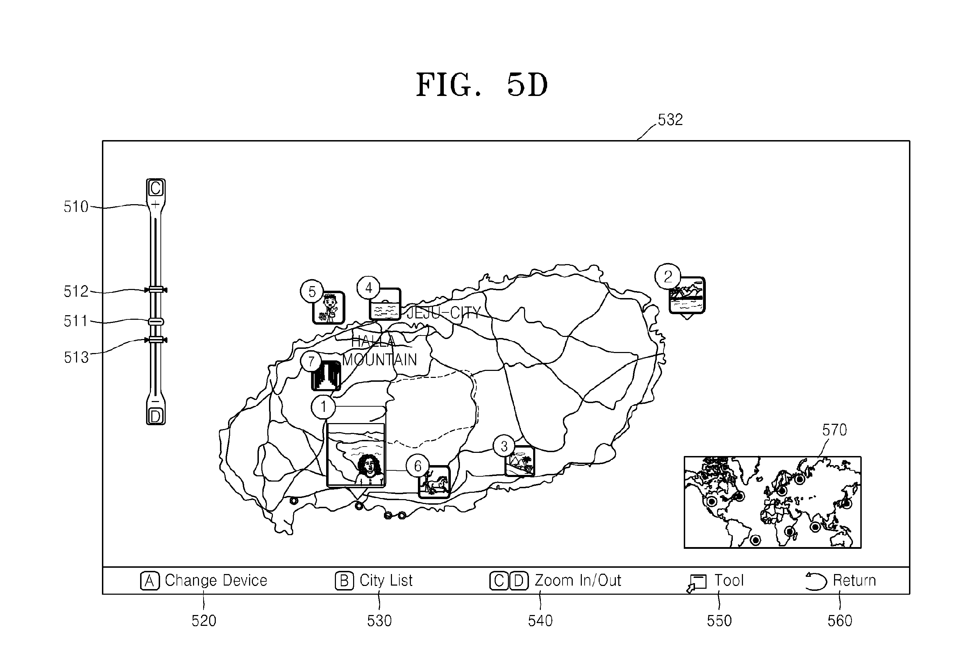

FIGURES 5C and 5D illustrate other maps 531 and 532 on which groups corresponding lower levels are displayed in the same manner as described with reference to FIGURE 5B.

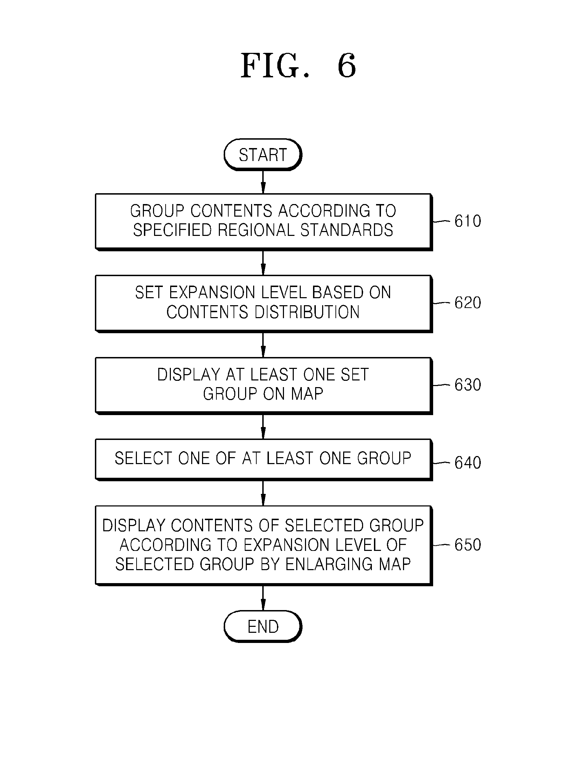

FIGURE 6 is a flowchart illustrating a method of searching contents, according to an embodiment of the present invention.

Referring to FIGURE 6, in operation 610, a contents searching apparatus groups contents according to specified regional standards. Additional information related to position, such as GPS information included in an image, is extracted from the contents, and adjacent contents are grouped based on the specified regional standards such as the continent or the countries based on the extracted position information.

In operation 620, the contents searching apparatus sets an expansion level to each of the content groups according to contents distribution included in the groups, that is, according to the number of instances of contents. The expansion level refers to a relative magnification degree of a map. For example, an expansion level1 may represent a size ratio of 1:25000, whereas an expansion level2 may represent a size ratio of 1:5000. According to one embodiment, if too many contents are included in a group, a magnification degree of the map on which the group is displayed may be set to a low level, and if the number of contents included in a group is relatively small, a magnification degree of the map on which the group is displayed is set to a relatively high level. A low level of magnification indicates that a magnification at which a map is displayed is high, that is, too much reduction has been done from the actual size. For example, if all of Korea is shown on a map on a single screen, a magnification level shown in this case may be regarded to be lower than all of Seoul is shown. If there are many contents related to Korea, an expansion level of content groups based on Korea is set to a low level, and thus, all of Korea is displayed on the map shown on the screen; if there are few contents related to the U.S.A., a magnification level of content groups based on the U.S.A. is set to a high level, and thus U.S. cities, which may be smaller in size than Korea, is displayed on the map.

In operation 630, the contents searching apparatus displays at least one set group on a map.

In operation 640, the contents searching apparatus selects one of groups among the groups displayed on the map based on a selection of the user.

In operation 650, the contents searching apparatus displays contents of a selected group by enlarging a map according to an expansion level of the selected group. In this case, a range of specific groups and a range of an area displayed on the map may be adjusted according to the size or resolution of a display unit. Also, information about the expansion level of the selected group, for example, a bar-type indicator showing an expansion degree, may be displayed on the map. In this case, the user may predict how much the map is to be expanded.

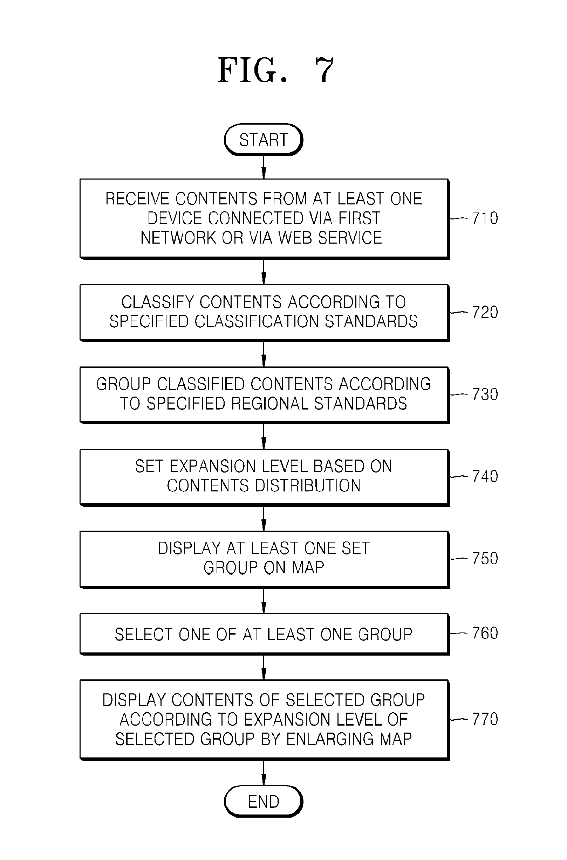

FIGURE 7 illustrates an example method of searching contents, according to this disclosure. In operation 710, the contents searching apparatus receives contents from at least one of device to which it is communicatively coupled via a first network or via a web service. The contents searching apparatus may receive contents from at least one of device, such as TV, PC, a mobile device (e.g., smart-phones), a home server or a set-top box, connected via a home network. Alternatively, the contents searching apparatus may receive contents from an Internet web service, such as Picasa or Flickr.
In some embodiments, the contents searching apparatus may receive a contents list from a contents provider.

In operation 720, the contents searching apparatus classifies contents according to specified classification standards.
The contents searching apparatus may classify not only received contents but also previously stored contents. The contents searching apparatus may classify additional information included in the contents according to classification standards such as one or more persons, a time associated with the contents, a preference associated with the contents, a frequency of occurrence of the contents, number of connection times associated with the contents, or the like.

In operation 730, the contents searching apparatus groups the classified contents according to specified regional standards. Operation 730 is identical to operation 610 except for the grouping of the classified contents, and thus, the description of operation 730 is omitted.

Operations 740 through 770 are respectively identical to operations 620 through 650 of FIGURE 6 and thus, the description thereof is omitted.

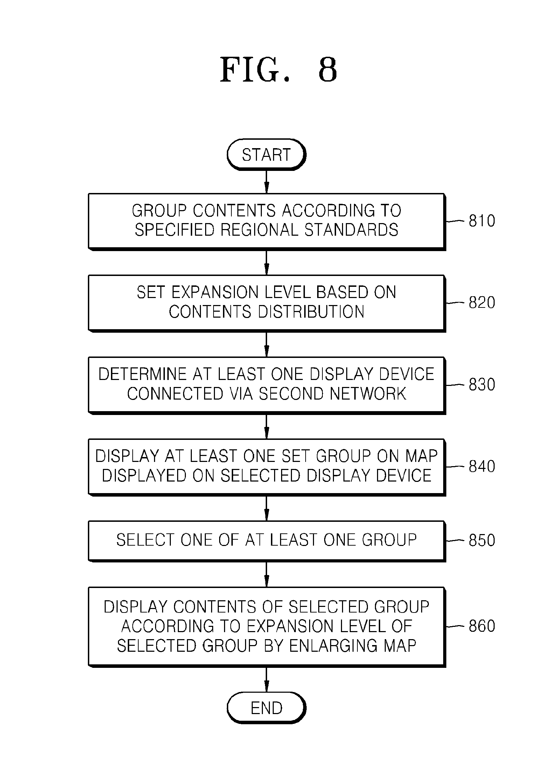

FIGURE 8 illustrates an example method of searching contents, according to this embodiment. Operations 810 and 820 are respectively identical to operations 610 and 620 of FIGURE 6, and thus, the description thereof is omitted.

In operation 830, a contents searching apparatus determines at least one display device to which it is coupled via a second network. The contents searching apparatus may designate a display device, which is capable of displaying contents, via a predetermined wired or wireless communication network. For example, the contents searching apparatus may designate at least one device, such as a TV, a PC, a mobile device, a projector, or a monitor, connected via a communication network. The contents searching apparatus may designate the at least one display device automatically or by selection.

In operation 840, the contents searching apparatus displays at least one set group on a map that is displayed on a selected display device.

Operations 850 and 860 are respectively identical to operations 640 through 650 of FIGURE 6, and thus, the description thereof is omitted.

The contents searching apparatus may also be embodied as computer readable codes on a computer-readable recording medium. The computer-readable recording medium is any data storage device that can store data which can be thereafter read by a computer system.
Examples of the computer-readable recording medium include read-only memory (ROM), random-access memory (RAM), CD-ROMs, magnetic tapes, floppy disks, optical data storage devices, etc. (such as data transmission through the Internet). The computer-readable recording medium can also be distributed over network-coupled computer systems so that the computer readable code is stored and executed in a distributed fashion. Also, functional programs, codes, and code segments for accomplishing the present invention can be easily construed by programmers skilled in the art to which the present invention pertains.
Although the present disclosure has been described with an exemplary embodiment, various changes and modifications may be suggested to one skilled in the art. It is intended that the present disclosure encompass such changes and modifications as fall within the scope of the appended claims.

## Claims

1. A contents searching method, comprising:
grouping contents according to specified regional standards, and displaying on a map at least one group to which an expansion level is set according to contents distribution;
selecting one of the at least one group; and
displaying contents of the selected group by enlarging the map according to an expansion level of the selected group.

2. The contents searching method of claim 1, further comprising automatically modifying a regional range of contents displayed on the map based on a screen size of a display device.

3. The contents searching method of claim 1, further comprising automatically modifying a regional range of contents displayed on the map based on a resolution of a screen of a display device.

4. The contents searching method of claim 1, further comprising displaying information about an expansion level of the selected group when the at least one group is selected.

5. The contents searching method of claim 1, wherein the grouping contents according to specified regional standards, and displaying on a map, at least one group to which an expansion level is set according to contents distribution comprises:
receiving contents from the outside; and
grouping the received contents according to specified regional standards, and displaying on the map the at least one group to which an expansion level is set according to contents distribution.

6. The contents searching method of claim 1, wherein the contents according to specified regional standards, and displayin g on a map at least one group to which an expansion level is set according to contents distribution comprises:
classifying contents according to specified classification standards; and
grouping the classified contents according to specified regional standards, and displaying on the map the at least one group to which an expansion level is set according to contents distribution.

7. The contents searching method of claim 1, further comprising displaying contents of the selected group by enlarging the map according to an expansion level of the selected group comprises:
determining at least one display device connected via a second network; and
displaying contents of the selected group on the determined at least one display device by enlarging the map according to an expansion level of the selected group.

8. A contents searching apparatus comprising:
a level setting unit configured to group contents according to specified regional standards and set an expansion level to at least one group based on contents distribution;
an interface unit configured to select one of the at least one group to which the expansion level is set; and
a control unit configured to provide contents of the selected group according to the expansion level of the selected group by enlarging a map.

9. The contents searching apparatus of claim 8, wherein the control unit is configured to automatically modify a regional range of contents displayed on the map based on the size of a screen of a display device.

10. The contents searching apparatus of claim 8, wherein the control unit is configured to modify a regional range of contents displayed on the map based on the resolution of a screen of a display device.

11. The contents searching apparatus of claim 8, further comprising a display unit, wherein when the at least one group is selected, the control unit is configured to generate information about an expansion level of the selected group, and the display unit is configured to display the information about the expansion level of the selected group.

12. The contents searching apparatus of claim 8, further comprising a reception unit configured to receive contents from the outside,
wherein the level setting unit is configured to group the received contents according to specified regional standards, and set an expansion level to at least one group based on contents distribution.

13. The contents searching apparatus of claim 8, further comprising a classification unit configured to classify contents according to specified classification standards,
wherein the level setting unit is configured to group the classified contents according to specified regional standards, and set an expansion level to at least one group based on contents distribution.

14. The contents searching apparatus of claim 8, wherein the control unit is configured to determine at least one display device connected via a second network, and provide the contents of the selected group to the determined at least one display device according to the expansion level of the selected group by enlarging the map.

15. A computer-readable recording medium embodying a computer program comprising computer readable code for:
grouping contents according to specified regional standards, and displaying on a map at least one group to which an expansion level is set according to contents distribution;
selecting one of the at least one group; and
displaying contents of the selected group according to the expansion level of the selected group by enlarging the map.
